Europäisches Patentamt

European Patent Office

Office européen des brevets

(11) Veröffentlichungsnummer: **0 216 217 B1**

(12) **EUROPÄISCHE PATENTSCHRIFT**

(45) Veröffentlichungstag der Patentschrift:
12.07.89

(51) Int. Cl.⁴: **B23Q 11/08**

(21) Anmeldenummer: 86112208.3

(22) Anmeldetag: 03.09.86

(54) Werkzeugmaschine.

(30) Priorität: 17.09.85 DE 3533089

(43) Veröffentlichungstag der Anmeldung:
01.04.87 Patentblatt 87/14

(45) Bekanntmachung des Hinweises auf die Patenterteilung:
12.07.89 Patentblatt 89/28

(84) Benannte Vertragsstaaten:
CH FR GB IT LI SE

(56) Entgegenhaltungen:
DE-A- 2 365 033
DE-A- 3 115 584

(73) Patentinhaber: Chiron-Werke GmbH, Talstrasse 23,
D-7200 Tuttlingen(DE)

(72) Erfinder: Rütschle, Eugen, Dipl.-Ing.,
Schönenbergstrasse 20, D-7202 Mühlheim(DE)
Erfinder: Haninger, Rudolf, Obere Hauptstrasse 7,
D-7201 Seitingen(DE)
Erfinder: Winkler, Hans-Henning, Dr.-Ing.,
Brunnentalstrasse 88, D-7200 Tuttlingen(DE)

(74) Vertreter: Witte, Alexander, Dr.-Ing.,
Schickhardtstrasse 24, D-7000 Stuttgart 1(DE)

## Beschreibung

Die Erfindung betrifft eine Werkzeugmaschine mit einem lageveränderlichen Werkstücktisch, bei dem ein erster Bereich in einer ersten Position als Bearbeitungsseite Werkstücke zum Bearbeiten mittels eines Werkzeuges der Werkzeugmaschine trägt und bei dem ein zweiter Bereich in einer zweiten Position als Bestückungsseite während des Bearbeitens mit einem weiteren Werkstück bestückt ist, wobei die Position der Bereiche durch Lageveränderung des Tisches vertauschbar ist und schließlich zwischen den Bereichen mindestens ein relativ zum Werkstücktisch bewegliches Spritzschutzelement angeordnet ist.

Eine derartige Werkzeugmaschine ist aus der DE-A 33 20 738 bekannt.

Die bekannte Werkzeugmaschine ist ein sogenanntes Bohr- und Fräszentrum mit senkrechtem Spindelstock, um den herum eine Mehrzahl von Werkzeugen angeordnet ist und bei dem die Werkzeuge mittels Greifarmen nacheinander in die Aufnahme des Spindelstocks einwechselbar sind, um an einem auf dem Werkstücktisch montierten Werkstück eine vorgegebene Folge von Bearbeitungsvorgängen vornehmen zu können. Der Spindelstock ist hierzu relativ zum Werkstücktisch in mehreren Achsen verfahrbar. Bei der bekannten Werkzeugmaschine ist der Werkstücktisch als Drehtisch ausgebildet, wobei die Drehachse eine zur Spindelachse parallele Hochachse ist und sich - vom Benutzer der Werkzeugmaschine aus betrachtet - vor der Spindelachse befindet.

Nachfolgend sollen die im Bereich des Spindelstocks bzw. des dem Spindelstock gegenüberstehenden Benutzers verfahrbaren Abschnitte des Werkstücktisches als "Bereich", die jeweilige Lage dieses Bereiches als "Position", der über dem Bereich befindliche Raum als "Arbeitsraum" und die jeweilige Zweckbestimmung der Bereiche in den verschiedenen Positionen als "Bearbeitungsseite" bzw. "Bestückungsseite" bezeichnet werden.

Bei der bekannten Werkzeugmaschine ist der Werkstücktisch in zwei Bereiche unterteilt und durch Drehung des Werkstücktisches um jeweils 180° befindet sich jeweils ein Bereich als Bearbeitungsseite in einer Position am Spindelstock und der jeweils andere Bereich als Bestückungsseite in einer Position beim Benutzer.

Während nun auf der Bearbeitungsseite ein dort aufgespanntes Werkstück bearbeitet wird, kann der Benutzer auf der Bestückungsseite bereits das nächste Werkstück montieren.

Bei der Bearbeitung eines Werkstücks ist jedoch Vorsorge dafür zu treffen, daß der Benutzer der Werkzeugmaschine nicht durch herumspritzende Bohrflüssigkeit beschmutzt oder gar durch herumfliegende Metallspäne verletzt wird. Bei der bekannten Werkzeugmaschine ist daher die eigentliche Werkzeugmaschine von einer ringsum geschlossenen Abdeckkabine umgeben und im Bereich des Benutzers ist eine an ihrer Oberseite schwenkbar eingehängte Tür vorgesehen, deren Aufhängung so gestaltet ist, daß die Ortskurve ihrer Unterkante beim Hochklappen der Tür über den Umriß eines zu bestückenden Werkstückes läuft und hinter diesem Umriß wieder nach unten verfährt. In der Offenstellung bildet somit die schwenkbare Tür eine Spritzschutzwand zwischen der Bearbeitungsseite und der Bestückungsseite.

Diese bekannte Anordnung erfordert jedoch eine an ihrer Oberseite aufgehängte und führbare Schwenktür, so daß diese Anordnung dann nicht einsetzbar ist, wenn die Verkleidung der Werkzeugmaschine an der Bestückungsseite nach oben offen sein muß, um beispielsweise sehr schwere und/oder sperrige Werkstücke in einem Kran auf den Werkstücktisch zu fahren.

Ein weiteres Problem bei derartigen Werkzeugmaschinen ist, daß man zwar einerseits die Gesamtfläche des Bereiches zum Aufspannen von einem oder mehreren Werkstücken nutzen will, daß sich aber Probleme ergeben können, wenn auf der Bearbeitungsseite der Spindelstock mit dem Werkzeug bis nahe an den Rand des Bereiches fährt, weil die Verkleidung des Spindelstocks dann bis in den gegnüberliegenden Bereich der Bestückungsseite hineinreicht. In diesem Falle müßte also das Spritzschutzelement auf der Fläche des Bereiches der Bestückungsseite angeordnet sein, damit das Werkzeug in der Spindelachse bis an den Rand des Bereiches auf der Bearbeitungsseite fahren kann. Dreht man nun jedoch den Werkstücktisch um 180°, ergeben sich gerade entgegengesetzte Forderungen, weil die beiden Bereiche nunmehr vertauscht sind und das Spritzschutzelement jetzt auf der Fläche des Bereiches stehen müßte, der zuvor auf der Bearbeitungsseite positioniert war. Eine Lösung dieses Widerspruchs ist bei der bekannten Werkzeugmaschine nicht vorgesehen.

Der Erfindung liegt daher die Aufgabe zugrunde, eine Werkzeugmaschine der eingangs genannten Art dahingehend weiterzubilden, daß ein freier Zugang zum Werkstücktisch von der Bestückungsseite her möglich ist, gleichzeitig jedoch ein wirksamer Spritzschutz zum Schutze des Benutzers zwischen Bearbeitungsseite und Bestückungsseite gewährleistet ist.

Diese Aufgabe wird erfindungsgemäß dadurch gelöst, daß das Spritzschutzelement den von den Bereichen definierten Arbeitsraum asymmetrisch unterteilt, derart, daß ein Bereich auf der Bearbeitungsseite einen größeren Arbeitsraum als ein Bereich auf der Bestückungsseite einnimmt, daß das Spritzschutzelement am Werkstücktisch angeordnet und so beweglich ist, daß bei Vertauschung der Positionen der Bereiche das Arbeitsraumverhältnis der Bereiche auf der Bearbeitungsseite bzw. der Bestückungsseite mindestens näherungsweise konstant bleibt und daß das Spritzschutzelement selbsttätig mit der Lageveränderung des Werkstücktisches beweglich ist.

Die der Erfindung zugrundeliegende Aufgabe wird damit vollkommen gelöst.

Erfindungsgemäß steht nämlich das Spritzschutzelement, beispielsweise eine massive Spritzschutzwand, unabhängig von der jeweiligen Lage des Arbeitstisches so, daß ein größerer Arbeitsraum auf der Bearbeitungsseite zur Verfügung steht, so daß der Spindelstock weit auf den Bearbeiter zu verfahren werden kann. Bei Verfahren des Tisches ändert sich hingegen die Position des Spritzschutzelementes selbsttätig mit dem Verfahren des Tisches, so daß keine zusätzlichen Führungsmittel von oben erforderlich sind. Die Bestückungsseite bleibt somit vollkommen frei und kann beispielsweise mit dem Kran, der ein schweres oder sperriges Werkstück trägt, ohne weiteres angefahren werden. Das stets in der erforderlichen Position angeordnete Spritzschutzelement, beispielsweise die massive Spritzschutzwand, gewährleistet dabei selbsttätig einen verhältnismäßig kleinen Winkel in Richtung auf den jeweils anderen Werkstücktisch hin verschwenkt und zwar erfolgt die maximale Auslenkung der Abschirmung durch die jeweilige Ecke des rechteckförmigen Werkstückhalters. Nach Ausführung der Drehung schwenkt die Abschirmung wieder in ihre Ausgangslage zurück, in der sie an einer Längs- oder Schmalseite des Werkstückhalters wieder anliegt und in dieser Position außerhalb der Bewegungsbahn des Werkstückhalters der jeweils anderen Abschirmung liegt. Die genannten Abschirmungen trennen nur die beiden Werkstücktische voneinander. Zur Abschirmung nach außen sind weitere, um die Ecke der Werkstücktische reichende Abschirmungen erforderlich, so daß insgesamt die bekannte Anordnung kompliziert aufgebaut ist und eine Reihe von Bewegungsvorgängen erfordert, und im wechselseitigen Spiel ein Bestücken und Bearbeiten der Werkstücke zu ermöglichen.

Der Erfindung liegt daher die Aufgabe zugrunde, eine Werkzeugmaschine der eingangs genannten Art dahingehend weiterzubilden, daß ein freier Zugang zum Werkstücktisch von der Bestückungsseite her möglich ist, gleichzeitig jedoch ein wirksamer Spritzschutz zum Schutze des Benutzers zwischen Bearbeitungsseite und Bestückungsseite gewährleistet ist.

Diese Aufgabe wird erfindungsgemäß dadurch gelöst, daß das Spritzschutzelement den von den Bereichen definierten Arbeitsraum asymmetrisch unterteilt, derart, daß ein Bereich auf der Bearbeitungsseite einen größeren Arbeitsraum als ein Bereich auf der Bestückungsseite einnimmt, daß das Spritzschutzelement am Werkstücktisch angeordnet und so beweglich ist, daß bei Vertauschung der Positionen der Bereiche das Arbeitsraumverhältnis der Bereiche auf der Bearbeitungsseite bzw. der Bestückungsseite mindestens näherungsweise konstant bleibt und daß das Spritzschutzelement selbsttätig mit der Lageveränderung des Werkstücktisches beweglich ist.

Die der Erfindung zugrundeliegende Aufgabe wird damit vollkommen gelöst.

Erfindungsgemäß steht nämlich das Spritzschutzelement, beispielsweise eine massive Spritzschutzwand, unabhängig von der jeweiligen Lage des Arbeitstisches so, daß ein größerer Arbeitsraum auf der Bearbeitungsseite zur Verfügung steht, so daß der Spindelstock weit auf den Bearbeiter zu verfahren werden kann. Bei Verfahren des Tisches ändert sich hingegen die Position des Spritzschutzelementes selbsttätig mit dem Verfahren des Tisches, so daß keine zusätzlichen Führungsmittel von oben erforderlich sind. Die Bestückungsseite bleibt somit vollkommen frei und kann beispielsweise mit dem Kran, der ein schweres oder sperriges Werkstück trägt, ohne weiteres angefahren werden. Das stets in der erforderlichen Position angeordnete Spritzschutzelement, beispielsweise die massive Spritzschutzwand, gewährleistet dabei selbsttätig und ohne daß ein weiterer Steuerungseingriff erforderlich wäre, daß der Benutzer der Maschine zuverlässig vor Bohrwasserspritzern und herumfliegenden Metallspänen geschützt ist.

Die Erfindung ergibt somit nicht nur einen größeren Anwendungsbereich der Werkzeugmaschine, auch für schwere und sperrige Werkstücke, sie erhöht darüber hinaus auch die Sicherheit des Benutzers.

Bei einer bevorzugten Ausgestaltung der Erfindung ist der Werkstücktisch horizontal ausgebildet und um eine Hochachse verdrehbar angeordnet, das Spritzschutzelement ist in der ersten Position mindestens näherungsweise parallel zur Hochachse und im Abstand zu dieser angeordnet, und es wird beim Vertauschen der Positionen in eine zweite Position, die zur ersten Position bezüglich der Hochachse klappsymmetrisch ist, parallel verschoben.

Diese Maßnahme hat den Vorteil, daß bei einem um eine Hochachse drehbaren Werkstücktisch, wie bei der bekannten Werkzeugmaschine der eingangs genannten Art, eine sehr einfache Aufteilung der Bereiche des Werkstücktisches durch eine selbsttätig hin- und herfahrende Spritzschutzwand realisiert werden kann.

Bei einer alternativen bevorzugten Ausgestaltung der Erfindung ist der Werkstücktisch horizontal ausgebildet und um eine Hochachse verdrehbar angeordnet, es sind beiderseits der Hochachse Spritzschutzelemente angeordnet, von denen das an die Bestückungsseite grenzende erste Spritzschutzelement mindestens näherungsweise senkrecht und das an die Bearbeitungsseite grenzende zweite Spritzschutzelement zum ersten Spritzschutzelement geneigt angeordnet ist, und beim Vertauschen der Positionen wird das erste Spritzschutzelement zum zweiten Spritzschutzelement geneigt und das zweite Spritzschutzelement in eine senkrechte Lage bewegt.

Auch diese Ausgestaltung der Erfindung hat somit den Vorteil, daß das auf der Bearbeitungsseite befindliche, geneigte Spritzschutzelement geeignet ist, das herumspritzende Bohrwasser und die herumfliegenden Metallspäne aufzufangen und nach unten ablaufen zu lassen, so daß der Raum zwischen den beiden Spritzschutzelementen geschützt ist und dort eine einfache Mechanik zur gegenläufigen Bewegung der beiden Spritzschutzelemente beim Verdrehen des Tisches angeordnet werden kann, die insbesondere vor herumfliegenden Metallspänen geschützt ist.

Die Tatsache, daß im Vergleich zu dem vorher beschriebenen Ausgestaltung der Arbeitsraum auf der Bearbeitungsseite durch das zweite, geneigte Spritzschutzelement etwas vermindert ist, stellt dabei keinen wesentlichen Nachteil dar, weil die Verkleidung von Spindelstöcken in der Regel ebenfalls nach unten zum Werkzeug hin verjüngt ausgebildet ist, so daß sich die geneigte Lage des Spritzschutzelementes an die ebenfalls geneigte Verkleidung des Spindelstocks anpaßt.

Bei den beiden vorstehend geschilderten Ausgestaltungen wird eine besonders gute Wirkung dadurch erzielt, daß eine Parallelogrammführung zum Bewegen des bzw. der Spritzschutzelemente vorgesehen ist, deren eines, am Werkstücktisch angelenktes Gelenkpaar auf einer die Hochachse schneidenden Geraden liegt und dessen anderes Gelenkpaar das bzw. die Spritzschutzelemente bewegt, daß eine Federanordnung zwischen Parallelogrammführung und Werkstücktisch wirkt und auf die Parallelogrammführung eine Rückstellkraft in eine Null-Position ausübt, in der die Gelenkpaare mindestens näherungsweise fluchten, daß die Parallelogrammführung einen Betätigungshebel umfaßt, der vor Erreichen einer von zwei um 180° bezüglich der Hochachse zueinander versetzter Endlagen des Werkstücktisches auf einen raumfesten Anschlag trifft.

Diese Maßnahmen haben den Vorteil, daß eine besonders einfache, robuste und selbsttätige Bewegung des bzw. der Spritzschutzelemente möglich ist. Die Parallelogrammführung, die über den Betätigungshebel bei Verdrehung des Werkstücktisches mittels raumfester Anschläge selbsttätig ausgelenkt wird, weist nur eine Mindestzahl von mechanischen Elementen auf und ist daher extrem einfach und unanfällig gegen Störungen. Das Vorsehen der Federanordnung hat den Vorteil, daß während des Verschwenkens des Werkstücktisches im Bereich außerhalb der raumfesten Anschläge sich das bzw. die Spritzschutzelemente selbsttätig in eine symmetrische Null-Position auf der mittleren Symmetrieachse des Werkstücktisches bewegen und erst kurz vor Erreichen der Endlagen selbsttätig ausgelenkt werden, weil der Betätigungshebel nunmehr in Anlage an jeweils einen der Anschläge gerät.

Die vorstehend geschilderte Parallelogrammführung kann bei der zunächst geschilderten Ausgestaltung mit nur einem Spritzschutzelement vorteilhaft dadurch weitergebildet sein, daß das andere Gelenkpaar das Spritzschutzelement trägt.

Diese Maßnahme hat den Vorteil, daß das Spritzschutzelement selbst einen Stab des Gelenkvierecks der Parallelogrammführung bildet und somit nur ein Mindestmaß an Betätigungselementen erforderlich ist.

Bei der anderen Ausgestaltung mit zwei zueinander neigbaren Spritzschutzelementen kann die Parallelogrammführung hingegen vorteilhaft so ausgebildet sein, daß das andere Gelenkpaar Führungslöcher von Stangen umfaßt, die die Spritzschutzelemente in Neigungsrichtung miteinander verbinden und kürzer als der Abstand zwischen den Spritzschutzelementen sind.

Diese Maßnahme hat den Vorteil, daß die gegenläufig zueinander einstellbare Neigung der Spritzschutzelemente in Neigungsrichtung durch ein trapezförmiges Gelenkviereck realisiert wird, das seinerseits durch das zweite Gelenkpaar der Parallelogrammführung betätigt wird. Auch diese Ausgestaltung kommt somit trotz höherer Komplexität als beim ersten Ausführungsbeispiel mit einer Mindestzahl von Betätigungselementen aus.

Weitere Vorteile ergeben sich aus der Beschreibung und der beigefügten Zeichnung.

Es versteht sich, daß die vorstehend genannten und die nachstehend noch geschilderten Merkmale keinesfalls nur in der jeweils angegebenen Kombination, sondern vielmehr auch in anderen Kombination oder jeweils in Alleinstellung verwendet werden können, ohne den durch die Patentansprüche definierten Rahmen der Erfindung zu verlassen. Insbesondere versteht sich, daß die Erfindung keinesfalls auf Werkzeugmaschinen mit um eine Hochachse verdrehbaren horizontalen Werkstücktischen beschränkt ist, sie kann vielmehr auch mit Vorteil bei anders geführten, insbesondere um beliebige Raumachsen gekippten oder verschobenen Werkstücktischen eingesetzt werden.

Ausführungsbeispiele der Erfindung sind in der Zeichnung dargestellt und werden in der nachfolgenden Beschreibung näher erläutert. Es zeigen:

Fig. 1 ein Ausführungsbeispiel einer erfindungsgemäßen Werkzeugmaschine in einer Ansicht von oben, teilweise abgebrochen;

Fig. 2 eine schematische Darstellung der Einzelheiten einer Parallelogrammführung zur Betätigung einer Spritzschutzwand einer erfindungsgemäßen Werkzeugmaschine;

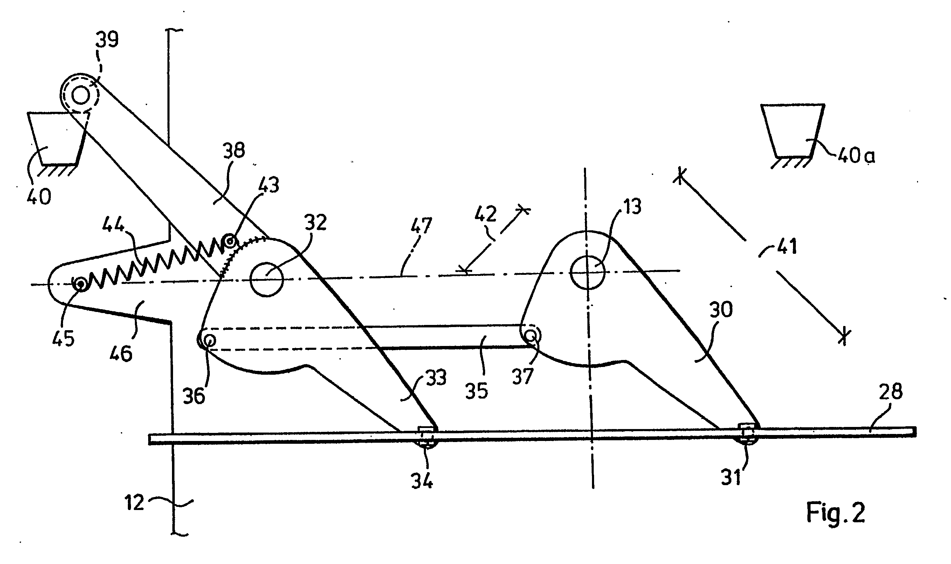

Fig. 3a bis 3c
schematische Darstellungen von drei Phasen der Drehbewegung eines Werkstücktisches mit einer Parallelogrammführung gemäß Fig. 2;

Fig. 4a und 4b
eine schematische Ansicht eines Ausschnitts eines weiteren Ausführungsbeispiels einer erfindungsgemäßen Werkzeugmaschine in Seitenansicht und Draufsicht.

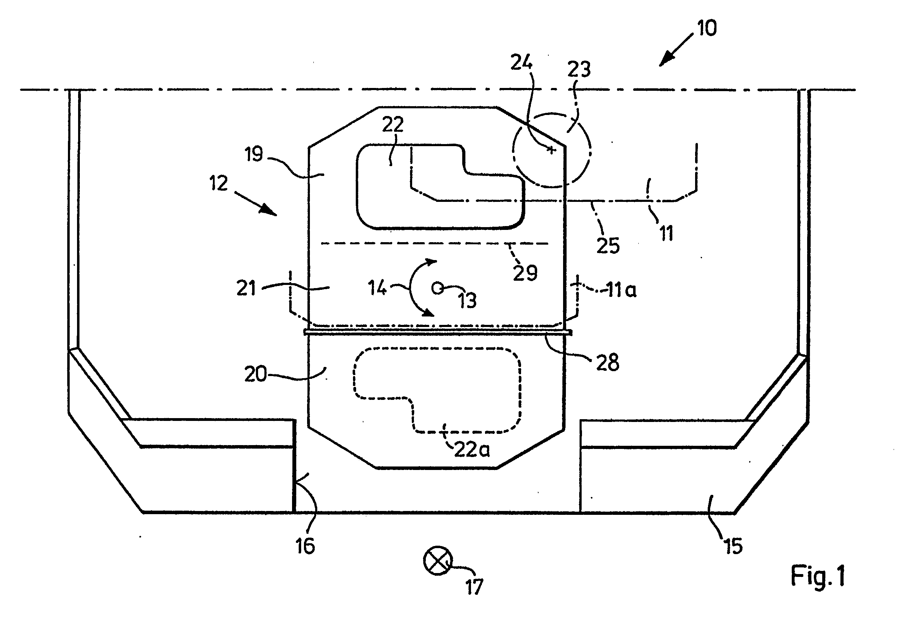

In Fig. 1 bezeichnet 10 insgesamt den abgebrochen dargestellten vorderen Teil einer Werkzeugmaschine in einer Ansicht von oben. Ein nur schematisch mit seinen Umrissen angedeuteter Spindelstock 11 ist in der Zeichenebene verfahrbar ausgeführt, wie mit einer zweiten Position 11a angedeutet. Man erkennt ferner einen gesamthaft mit 12 bezeichneten Werkstücktisch, der um eine senkrecht zur Zeichenebene verlaufende Hochachse 13 in Richtung eines Doppelpfeils 14 um 180° hin- und herdrehbar ausgeführt ist. Die Werkzeugmaschine 10 ist allseits von einer Verkleidung umgeben, deren vorderer Teil auf der Benutzerseite mit 15 bezeichnet ist. Die Vorderverkleidung 15 ist durch eine Öffnung 16 unterbrochen, so daß an einem Punkt 17 vor der Werkzeugmaschine 10 der Benutzer stehen kann oder über diesen Punkt 17 von vorne ein sperriges und schweres Werkstück mittels eines Kranes in den Innenraum der Verkleidung auf den Werkstücktisch 12 gefahren werden kann.

Die Oberfläche des Werkstücktisches 12 unterteilt sich in eine Bearbeitungsseite 19 im Bereich des Spindelstocks 11 sowie eine Bestückungsseite 20 nahe der Öffnung 16, und zwischen diesen beiden ist ein Mittelabschnitt 21 vorgesehen. Auf der Bearbeitungsseite 19 ist ein montiertes Werkstück 22 zu erkennen, während auf der Bestückungsseite 20 vom Benutzer ein weiteres Werkstück 22a in dem dort gestrichelt eingezeichneten Umriß für eine nachfolgende Bearbeitung montiert werden kann. Man erkennt, daß die Werkstücke 22, 22a die Oberfläche der Bearbeitungsseite 19 bzw. der Bestückungsseite 20 nicht überschreiten.

Der Spindelstock 11 ist räumlich weiter ausladend als die eigentliche Spindel 23 in der Spindelachse 24, weil eine Verkleidung 25 des Spindelstocks 11 vorgesehen ist, die die Antriebselemente, die Greifarme zum Einwechseln der Werkzeuge, ein Werkzeugmagazin u. dgl. umschließt. Es ist daher einsehbar, daß beim Bearbeiten des Werkstücks 22 auf der Bearbeitungsseite 19 zur Bestückungsseite 20 noch ein gewisser Freiraum existieren muß, damit der Spindelstock 11 so weit verfahren kann, daß die Spindelachse 24 die gesamte Oberfläche des Werkstückes 22 überstreichen kann. Dieser Freiraum wird durch den Mittelabschnitt 21, der von Werkstücken 22, 22a frei ist, gebildet.

Um den am Punkt 17 stehenden Benutzer, der gerade ein Werkstück 22a montiert, während das Werkstück 22 bearbeitet wird, vor herumspritzender Bohrflüssigkeit und herumfliegenden Metallspänen zu schützen, ist zwischen Bestückungsseite 20 und Mittelabschnitt 21 eine Spritzschutzwand 28 angeordnet. Aufgrund dieser Positionierung der Spritzschutzwand 28 kann der Spindelstock 11 mit seiner Verkleidung 25 bis an die Spritzschutzwand 28 heranfahren, wie dies mit 11a angedeutet ist, und die Spindelachse 24 kann demzufolge die gesamte Oberfläche der Bearbeitungsseite 19 überstreichen.

Es ist allerdings weiter einsehbar, daß die Spritzschutzwand 28 nicht starr in der in Fig. 1 dargestellten Lage montiert sein kann, weil bei einer Drehung des Werkstücktisches 12 um 180° sie dann in eine Position 29 käme, die bei einer Bearbeitung des dann auf der Bearbeitungsseite 19 befindlichen Werkstückes 22a im Wege stünde.

Die Spritzschutzwand 28 ist daher beweglich ausgebildet, wie nachstehend anhand von Fig. 2 erläutert wird:

Man erkennt, daß die Spritzschutzwand 28 eine Längsseite einer Parallelogrammführung bildet. Um die Hochachse 13 ist ein erster Hebel 30 schwenkbar angeordnet, der an seinem freien Ende in einem Gelenk 31 die Spritzschutzwand 28 hält. Um eine von der Hochachse 13 beabstandete weitere Achse 32 ist ein zweiter Hebel 33 schwenkbar angeordnet, der an seinem freien Ende mittels eines Gelenkes 34 ebenfalls die Spritzschutzwand 28 hält. Um die beiden Hebel 30, 33 synchron zu bewegen, ist eine Stange 35 vorgesehen, die mittels Gelenken 36, 37 die Hebel 30, 33 miteinander verbindet. Hierdurch sind die Hebel 30, 33 als zweiarmige Hebel gestaltet, wobei ein erster Hebelarm 41 die Spritzschutzwand 28 hält und ein zweiter Hebelarm 42 zur Stange 35 führt.

Die Parallelogrammführung wird somit einerseits durch die Oberfläche des Tisches 12 mit dem ersten Gelenkpaar 13/32, die beiden Hebel 30, 33 und schließlich die Spritzschutzwand 28 am zweiten Gelenkpaar 31/34 gebildet. Die Stange 35 könnte an sich entfallen, sie dient im wesentlichen dazu, bei der Bewegung der Parallelogrammführung die erforderlichen Bewegungskräfte nicht über die Spritzschutzwand 28 leiten zu müssen.

Zum Betätigen der Parallelogrammführung ist an den zweiten Hebel 33 starr ein dritter Hebel 38 als Betätigungshebel angeformt, der an seinem freien Ende eine Rolle 39 trägt. In der in Fig. 2 dargestellten Position legt die Rolle 39 an einem ersten raumfesten Anschlag 40 an, dem - bezüglich der Achsen 13, 32 - ein zweiter raumfester Anschlag 40a symmetrisch gegenübersteht.

Der dritte Hebel 38 weist in der Nähe seiner Drehachse 32 ein weiteres Gelenk 43 auf, an dem eine Zugfeder 44 angreift. Das andere Ende der Zugfeder 44 ist an einem Gelenk 45 befestigt, das sich an einem Vorsprung 46 des Werkstücktisches 12 befindet. Das Gelenk 45 und die Achsen 32 und 13 liegen auf einer Geraden 47.

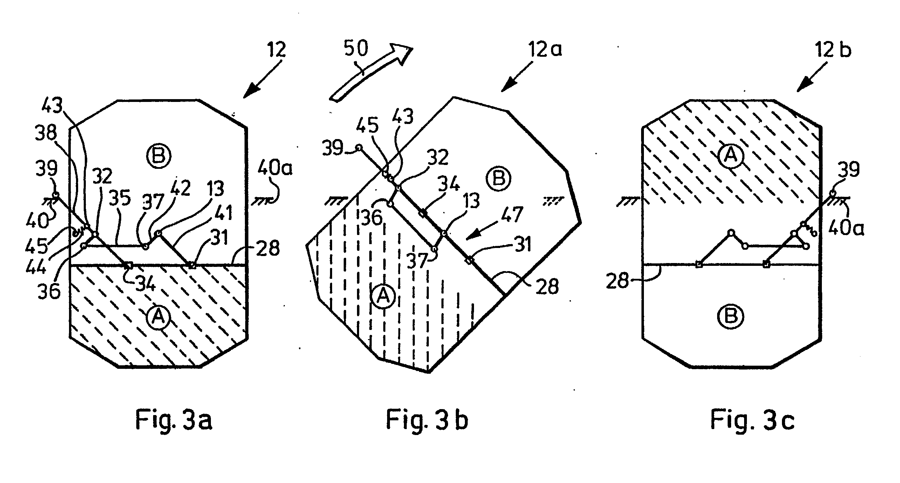

Die Funktionsweise der Parallelogrammführung gemäß Fig. 2 soll nun anhand der in den Fig. 3a bis 3c dargestellten Bewegungsphasen erläutert werden:

Bei der Darstellung der Fig. 3a bis 3c ist zur Verdeutlichung einer der Bereiche des Werkstücktisches 12 mit A und der andere mit B bezeichnet. In der Ausgangsstellung gemäß Fig. 3a befindet sich der Bereich A in dem gestrichelt schraffiert eingezeichneten Ausmaß auf der Bestückungsseite und der Bereich B auf der Bearbeitungsseite. Die Parallelogrammführung mit den Elementen 30 bis 42 befindet sich in der bereits in Fig. 2 dargestellten einen Endstellung, und es sind gleiche Teile in den Fig. 2 bzw. 3a bis 3c mit gleichen Bezugszeichen versehen.

Wird nun der Werkstücktisch 12 in eine Position 12a gemäß Fig. 3b in Richtung eines Pfeiles 50 verdreht, hebt die Rolle 39 vom ersten raumfesten Anschlag 40 ab. Unter der Wirkung der Zugfeder 44 gelangt nun die Parallelogrammführung in eine Null-Position, in der die Rolle 39, die Gelenke 45, 43, 32, 34, 13, 31 ebenso wie die Spritzschutzwand 28 auf der Geraden 47 liegen.

Wird nun der Werkstücktisch 12 aus der Position 12a gemäß Fig. 3b weiter in Richtung des Pfeiles 50 in die zu Fig. 3a entgegengesetzte Endlage 12b gemäß Fig. 3c gedreht, gelangt kurz vor Erreichen dieser Endlage 12b die Rolle 39 in Anlage an den zweiten raumfesten Anschlag 40a, und die Parallelogrammführung mit ihren Elementen 30 bis 42 spannt sich gegen die Kraft der Zugfeder 44 wieder in eine zur Stellung gemäß Fig. 3a symmetrische Stellung auf. Hierdurch befindet sich die Spritzschutzwand 28 wieder in einer aus der Mitte zur Bestückungsseite 20 verschobenen Lage, wobei jedoch nunmehr die Bereiche A und B ihre Position vertauscht haben.

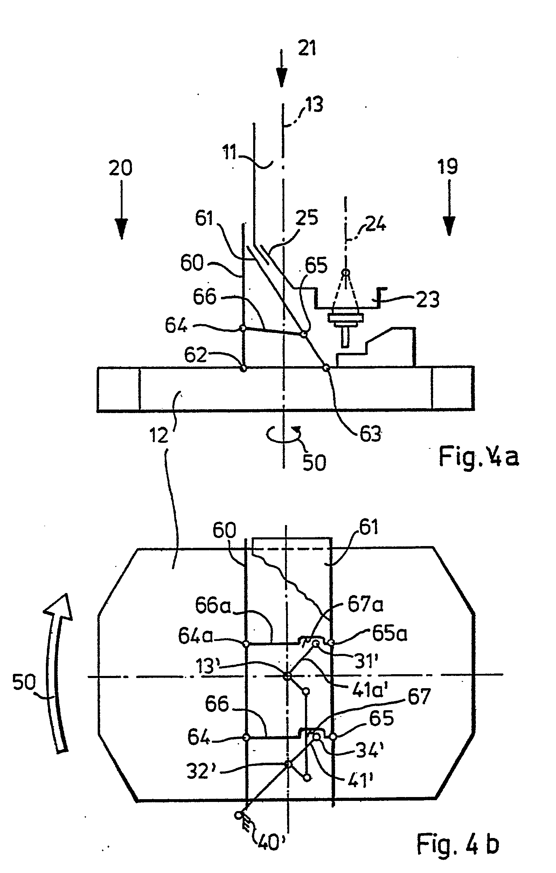

Die Fig. 4a und 4b zeigen ein weiteres Ausführungsbeispiel in Seitenansicht sowie in einer Ansicht von oben.

Bei der Seitenansicht gemäß Fig. 4a erkennt man den insoweit unveränderten Werkstücktisch 12 mit Bearbeitungsseite 19, auf der sich der Spindelstock 11 befindet, sowie die Bestückungsseite 20. Im Gegensatz zum Ausführungsbeispiel gemäß den Fig. 1 bis 3 sind jedoch im Ausführungsbeispiel gemäß Fig. 4 nicht eine einzige Spritzschutzwand, sondern vielmehr deren zwei vorgesehen, die mit 60 und 61 bezeichnet sind. Die erste Spritzschutzwand 60 ist zur Oberfläche des Werkstücktisches 12 senkrecht in einer Position angeordnet, die der Position der Spritzschutzwand 28 in Fig. 1 entspricht. Relativ zur Hochachse 13 ist die zweite Spritzschutzwand 61 symmetrisch zur ersten Spritzschutzwand 60 angeordnet. Sie ist jedoch von der Bearbeitungsseite 19 weg geneigt angeordnet und kann beispielsweise mit ihrem oberen freien Rand die erste, senkrechte Spritzschutzwand 60 berühren.

Wie man aus Fig. 4a leicht erkennen kann, bedeutet die geneigte Anordnung der zweiten Spritzschutzwand 61 keine wesentliche Einbuße des Arbeitsraumes im Bereich der Bearbeitungsseite 19, weil die Verkleidung 25 des Spindelstocks 11 nach unten zur Spindelachse 24 hin ohnehin verjüngt verläuft, so daß die Spindelachse 24 bis an den Rand des Bereiches auf der Bearbeitungsseite 19 herangefahren werden kann. Andererseits ist die zweite, geneigte Spritzschutzwand 61 jedoch hervorragend geeignet, um darauf auftreffende Spritzer von Bohrwasser oder Metallspäne nach unten abzuleiten, ohne daß diese in den Mittelabschnitt 21 zwischen den Spritzschutzwänden 60, 61 gelangen können, in dem sich die Mechanik zur gegenläufigen Bewegung der Spritzschutzwände 60, 61 befindet.

Um diese gegenläufige Bewegung zu erreichen, sind die Spritzschutzwände 60, 61 auf der Oberfläche des Werkstücktisches 12 in Scharnieren 62, 63 schwenkbar gehaltert. Im gleichen Abstand von den Scharnieren 62, 63 sind an den Spritzschutzwänden 60, 61 Gelenke 64, 65 vorgesehen, die mit einer Stange 66 oder mehreren parallelen Stangen 66, 66a verbunden sind. Die Stange 66 bildet daher mit den Gelenken 64, 65, den unteren Abschnitten der Spritzschutzwände 60, 61, den Scharnieren 62, 63 und der Oberfläche des Werkstücktisches 12 im Bereich des Mittelabschnittes 21 ein trapezförmiges Gelenkviereck. Dieses Gelenkviereck läßt sich in die in Fig. 4a eingezeichnete sowie in eine dazu um die Hochachse 13 klappsymmetrische Stellung verschwenken, in der die erste Spritzschutzwand 60 geneigt und die zweite Spritzschutzwand 61 senkrecht angeordnet sind.

Um diese Hin- und Herbewegung synchron zur Verdrehung des Werkstücktisches 12 um jeweils 180° hin und her zu bewirken, ist eine Parallelogrammführung vorgesehen, die weitgehend der Parallelogrammführung gemäß den Fig. 2 und 3 entspricht und die in Fig. 4b dargestellt ist. Entsprechende Elemente der Parallelogrammführung sind in Fig. 4b mit denselben Bezugszeichen wie in den Fig. 2 und 3, ggf. ergänzt um einen Apostroph, bezeichnet.

Man erkennt aus Fig. 4b deutlich, daß die freien Enden der Hebelarme 41' bzw. 41a' nicht direkt eine Spritzschutzwand tragen, wie dies beim Ausführungsbeispiel der Fig. 2 und 3 der Fall war, die freien Enden greifen vielmehr in Langlöcher 67 bzw. 67a zweier im Abstand voneinander angeordneter Stangen 66 bzw. 66a, die in der in Fig. 4a gezeigten Weise die Spritzschutzwände 60 und 61 miteinander verbinden. Bei Drehung des Werkstücktisches 12 in einer Richtung, die in Fig. 4b mit einem Pfeil 50 angedeutet ist, gelangt die Parallelogrammführung zunächst unter dem Einfluß einer in Fig. 4b der Übersichtlichkeit halber nicht eingezeichneten Zugfeder in die Null-Position, in der - in der Darstellung von Fig. 4a - die Spritzschutzwände 60, 61 zusammen mit der durch den Mittelabschnitt 21 definierten Basis ein gleichschenkliges Dreieck bilden. Kurz vor Erreichen der um 180° versetzten zweiten Endlage wird die Parallelogrammführung wieder symmetrisch in eine zur ursprünglichen Richtung entgegengesetzte Richtung aufgespannt, und die Spritzschutzwände 60, 61 nehmen eine zur Fig. 4a symmetrisch entgegengesetzte Position ein.

## Patentansprüche

1. Werkzeugmaschine mit einem lageveränderlichen Werkstücktisch (12), bei dem ein erster Bereich (A) in einer ersten Position als Bearbeitungsseite (19) Werkstücke (22) zum Bearbeiten mittels eines Werkzeuges der Werkzeugmaschine trägt und bei dem ein zweiter Bereich (B) in einer zweiten Position als Bestückungsseite (20) während des Bearbeitens mit einem weiteren Werkstück (22a) bestückbar ist, wobei die Position der Bereiche (A, B) durch Lageveränderung des Werkstücktisches (12) vertauschbar ist und schließlich zwischen den Bereichen (A, B) mindestens ein relativ zum Werkstücktisch (12) bewegliches Spritzschutzelement (28; 60, 61) angeordnet ist, dadurch gekennzeichnet, daß das Spritzschutzelement (28; 60, 61) den von den Bereichen (A, B) definierten Arbeitsraum asymmetrisch unterteilt, derart, daß ein Bereich (A) auf der Bearbeitungsseite (19) einen größeren Arbeitsraum als ein Bereich (B) auf der Bestückungsseite (20) einnimmt, daß das Spritzschutzelement (28; 60, 61) am Werkstücktisch (12) angeordnet und so beweglich ist, daß bei Vertauschung der Positionen der bereiche (A, B) das Arbeitsraumverhältnis der Bereich (A, B) auf der Bearbeitungsseite (19) bzw. der Bestückungsseite (20) mindestens näherungsweise konstant bleibt und daß das Spritzschutzelement (28; 60, 61) selbsttätig mit der Lageveränderung des Werkstücktisches (12) beweglich ist.

2. Werkzeugmaschine nach Anspruch 1, dadurch gekennzeichnet, daß der Werkstücktisch (12) horizontal ausgebildet und um eine Hochachse (13) verdrehbar angeordnet ist, daß das Spritzschutzelement (28) in der ersten Position mindestens näherungsweise parallel zur Hochachse (13) und im Abstand zu dieser angeordnet ist und daß es beim Vertauschen der Positionen in eine zweite Position, die zur ersten Position bezüglich der Hochachse (13) klappsymmetrisch ist, parallel verschoben wird.

3. Werkzeugmaschine nach Anspruch 1, dadurch gekennzeichnet, daß der Werkstücktisch (12) horizontal ausgebildet und um eine Hochachse (13) verdrehbar angeordnet ist, daß beiderseits der Hochachse (13) Spritzschutzelemente (60, 61) angeordnet sind, von denen das an die Bestückungsseite (20) grenzende erste Spritzschutzelement (60) mindestens näherungsweise senkrecht und das an die Bearbeitungsseite (19) grenzende zweite Spritzschutzelement (61) zum ersten Spritzschutzelement (20) geneigt angeordnet ist und daß beim Vertauschen der Positionen das erste Spritzschutzelement (60) zum zweiten Spritzschutzelement (61) geneigt und das zweite Spritzschutzelement (61) in eine senkrechte Lage bewegt wird.

4. Werkzeugmaschine nach Anspruch 2 oder 3, dadurch gekennzeichnet, daß eine Parallelogrammführung (30 bis 42) zum Bewegen des bzw. der Spritzschutzelemente (28; 60, 61) vorgesehen ist, deren eines, am Werkstücktisch (12) angelenktes Gelenkpaar (13/32; 13'/32') auf einer die Hochachse (13) schneidenden Geraden (47) liegt und dessen anderes Gelenkpaar (31/34; 31'/34') das bzw. die Spritzschutzelemente (28; 60, 61) bewegt, daß eine Federanordnung (43 bis 45) zwischen Parallelogrammführung (30 bis 42) und Werkstücktisch (12) wirkt und auf die Parallelogrammführung (30 bis 42) eine Rückstellkraft in eine Null-Position ausübt, in der die Gelenkpaare (13/32, 31/34; 13'/32', 31'/34') mindestens näherungsweise fluchten und daß die Parallelogrammführung (30 bis 42) einen Betätigungshebel (38) umfaßt, der vor Erreichen einer von zwei um 180° bezüglich der Hochachse (13) zueinander versetzter Endlagen des Werkstücktisches (12) auf einen raumfesten Anschlag (40, 40a) trifft.

5. Werkzeugmaschine nach Anspruch 2 und 4, dadurch gekennzeichnet, daß das andere Gelenkpaar (31/34) das Spritzschutzelement (28) trägt.

6. Werkzeugmaschine nach Anspruch 3 und 4, dadurch gekennzeichnet, daß das andere Gelenkpaar (31'/34') Führungslöcher (67, 67a) von Stangen (66, 66a) umfaßt, die die Spritzschutzelemente (60, 61) in Neigungsrichtung miteinander verbinden und kürzer als der Abstand zwischen den Spritzschutzelementen (60, 61) sind.

**Revendications**

1. Machine-outil avec une table porte-pièces à position modifiable (12), dont une première région (A) porte à une première position, en tant que côté d'usinage (19), des pièces (22) à usiner au moyen d'un outil de la machine-outil, et dont une deuxième région (B) peut, à une deuxième position, en tant que côté d'équipement (20), être équipée pendant l'usinage d'une pièce supplémentaire (22a), la position des régions (A, B) pouvant être permutée en modifiant la position de la table porte-pièces (12), et, enfin, au moins un élément de protection contre les projections (28; 60, 61), déplaçable par rapport à la table porte-pièces (12), étant disposé entre les régions (A, B), caractérisée en ce que l'élément de protection contre les projections (28; 60, 61) divise de manière asymétrique l'espace de travail défini par les régions (A, B), de telle sorte qu'une région (A), du côté d'usinage (19), occupe un plus grand espace de travail qu'une région (B), du côté d'équipement (20), en ce que l'élément de protection contre les projections (28; 60, 61) est disposé contre la table porte-pièces (12) et est déplaçable de telle sorte que, lors de la permutation des positions des régions (A, B), le rapport des espaces de travail des régions (A, B) respectivement du côté d'usinage (19) et du côté d'équipement (20) demeure au moins approximativement constant, et en ce que l'élément de protection contre les projections (28; 60, 61) est déplaçable automatiquement avec la modification de la position de la table porte-pièces (12).

2. Machine-outil selon la revendication 1, caractérisée en ce que la table porte-pièces (12) est disposée horizontalement et est montée rotative autour d'un axe vertical (13), en ce que l'élément de protection contre les projections (28) est disposé, à la première position, au moins approximativement parallèlement à l'axe vertical (13) et à distance de ce dernier, et en ce que, lors de la permutation des positions, cet élément est déplacé en parallèle vers une deuxième position qui est symétrique à la première position par rapport à l'axe vertical (13), autour duquel s'effectue le basculement dudit élément.

3. Machine-outil selon la revendication 1, caractérisée en ce que la table porte-pièces (12) est disposée horizontalement et est montée rotative autour d'un axe vertical (13), en ce que des éléments de protection contre les projections (60, 61) sont disposés de part et d'autre de l'axe vertical (13), le premier élément de protection contre les projections (60), limitrophe du côté d'équipement (20), étant disposé au moins approximativement verticalement, et le deuxième élément de protection contre les projections (61), limitrophe du côté d'usinage (19), étant disposé incliné par rapport au premier élément de protection contre les projections (60), et en ce que, lors de la permutation des positions, le premier élément de protection contre les projections (60) est incliné par rapport au deuxième élément de protection contre les projections (61), et le deuxième élément de protection contre les projections (61) est déplacé à une position verticale.

4. Machine-outil selon la revendication 2 ou 3, caractérisée en ce qu'il est prévu, pour le déplacement du ou des éléments de protection contre les projections (28 ; 60, 61), un parallélogramme articulé (30 à 42), dont une paire d'éléments articulés (13/32, 13'/32'), articulée à la table porte-pièces (12), se situe sur une droite (47) coupant l'axe vertical (13), et dont l'autre paire d'éléments articulés (31/34; 31'/34') déplace le ou les éléments de protection contre les projections (28; 60, 61), en ce qu'un ensemble de ressorts (43 à 45) agit entre le parallélogramme articulé (30 à 42) et la table porte-pièces (12), et exerce sur le parallélogramme articulé (30 à 42) une force de rappel à une position neutre, à laquelle les paires d'éléments articulés (13/32, 31/34; 13'/32', 31'/34') sont au moins approximativement alignées, et en ce que le parallélogramme articulé (30 à 42) comprend un levier d'actionnement (38) qui rencontre une butée à position fixe (40, 40a) avant d'atteindre l'une de deux positions finales de la table porte-pièces (12) mutuellement décalées de 180° par rapport à l'axe vertical (13).

5. Machine-outil selon les revendications 2 et 4, caractérisée en ce que l'autre paire d'éléments articulés (31/34) porte l'élément de protection contre les projections (28).

6. Machine-outil selon les revendications 3 et 4, caractérisée en ce que l'autre paire d'éléments articulés (31'/34') comprend des orifices de guidage (67, 67a) de tringles (66, 66a) qui relient entre eux les éléments de protection contre les projections (60, 61) dans le sens de l'inclinaison, et qui sont plus courtes que la distance entre les éléments de protection contre les projections (60, 61).

## Claims

1. Machine tool having a displaceable work table (12), comprising a first area (A), which in a first position in which it serves as the processing side (19), carries a workpiece (22) for being processed by means of a tool of the machine tool, and a second area (B) which in a second position in which it serves as the mounting side (20) can receive another workpiece (22a), the two positions of the areas being exchangeable by displacement of the table (12), and at least one splash guard (28; 60, 61) which can be moved relative to the work table (12) and which is arranged between the table areas (A, B), characterized in that the splash guard (28; 60, 61) subdivides the working space defined by the areas (A, B) asymmetrically so that an area (A) on the processing side (19) occupies a larger working space than an area (B) on the mounting side (20), that the splash guard (28; 60, 61) is arranged on the work table (12) and adapted to move in such a manner that the working space ratio between the area (A, B) on the processing side (19) and the area (A, B) on the mounting side (20) remains at least approximately constant when the positions of the two areas (A, B) are changed, and that the splash guard (28; 60, 61) moves automatically when the work table (12) changes its position.

2. The machine tool of claim 1, characterized in that the work table (12) is of horizontal design and arranged to rotate about a vertical axis (13) and the splash guard (28) extends, in a first position, at least approximately parallel to the vertical axis (13) and at a distance thereto and is subjected to parallel displacement when the positions are changed, and thereby moved to a second position mirror-symmetrical to the first position, relative to the vertical axis (13).

3. The machine tool of claim 1, characterized in that the work table (12) is of horizontal design and can be rotated about a vertical axis (13), that splash guards (60, 61) are provided on both sides of the vertical axis (13), with the first splash guard (60) provided adjacent the mounting side (20) being arranged at least approximately vertically and the second splash guard (61) provided adjacent processing side (19) being inclined relative to the first splash guard (60), and that the first splash guard (60) is inclined relative to the second splash guard (61), and the second splash guard (61) is brought into a vertical position when the positions are changed.

4. The machine tool of any of claims 2 or 3, characterized in that a parallelogram guide (30 through 42) is used for moving the splash guard (28) or splash guards (60, 61) respectively, comprising one pair of joints (13/32; 13'/32') which is mounted on the work table (12) along a straight line (47) intersecting the vertical axis (13), and another pair of joints (31/34; 31'/34') moving the splash guard (28) or splash guards (60, 61) respectively, that a spring arrangement (43 through 45) acts between the parallelogram guide (30 through 42) and the work table (12) and exerts upon the parallelogram guide (30 through 42) a force tending to return it to a zero position in which the pairs of joints (13/32. 31/34; 13'/32', 31'/34') are at least approximately aligned with each other, and that the parallelogram guide (30 through 42) comprises an actuating lever (38) which abuts against a fixed stop before the work table (12) reaches one of two end positions which are set off by 180° relative to the vertical axis (13).

5. The machine tool of claims 2 and 4, characterized in that the other pair of joints (31/34) carried the splash guard (28).

6. The machine tool of claims 3 and 4, characterized in that the other pair of joints (31'/34') comprises guide holes (67, 67a) of bars (66, 66a) interconnecting the splash guards (60, 61) in the direction of their inclination and being shorter in length than the distance between the splash guards (60, 61).

Fig.1

Fig. 2

EP 0 216 217 B1

Fig. 3a          Fig. 3b          Fig. 3c

EP 0 216 217 B1

Fig. 4a

Fig. 4 b